# FASCICULE DE BREVET EUROPEEN

(11) **EP 3 641 106 B1**
(45) Date de publication et mention de la délivrance du brevet: **15.06.2022**
(21) Numéro de dépôt: 19204158.0
(22) Date de dépôt: 18.10.2019
(51) Int. Cl.: H02K 3/52, H02K 9/00

(54) **MACHINE TOURNANTE ELECTRIQUE**
ELEKTRISCH UMLAUFENDE MASCHINE
ELECTRIC ROTATING MACHINE

(30) Priorité: 19.10.2018 FR 1859679
(43) Date de publication de la demande: 22.04.2020
(73) Titulaire: Moteurs Leroy-Somer, 16915 Angouleme (FR)
(72) Inventeur: VOHLGEMUTH, Patrick, 16560 ANAIS (FR)
(74) Mandataire: Nony

(56) Documents cités:
- EP-A2- 1 983 635
- FR-A1- 2 894 088
- FR-A1- 2 940 867
- US-A- 2 720 605
- US-A1- 2017 163 116

## Description

La présente invention concerne un rotor de machine tournante électrique, encore appelé roue polaire, et plus particulièrement, mais non exclusivement, un rotor bobiné d'alternateur industriel.

La grande majorité des rotors d'alternateurs industriels sont des rotors bobinés, c'est-à-dire qu'ils comportent des enroulements de conducteurs électriques (encore appelés bobines inductrices) destinés à être parcourus par un courant électrique continu d'intensité variable. Compte tenu de la nature des matériaux des conducteurs, du diamètre de giration sur lequel ils sont implantés, et de la vitesse de rotation du rotor, il est impératif de maintenir solidement ces enroulements sur le rotor.

En effet, dans de tels alternateurs, les bobines du rotor sont soumises à des efforts centrifuges lors de la rotation du rotor, ces efforts sont d'autant plus importants que le diamètre du rotor et sa vitesse de rotation sont élevés. Les pièces destinées à maintenir les bobines le long du corps de roue polaire s'appellent communément « cales de roue polaire » ou « cales de rotor ».

Les constructeurs utilisent différentes formes et différents principes pour assurer cette fonction de calage des bobines sur le rotor. Certaines cales sont monobloc, d'autres sont en plusieurs éléments ; certaines nécessitent d'être complétées par un ou plusieurs accessoires de serrage de type vis et écrous, d'autres sont montées à force.

Par ailleurs, l'augmentation de l'intensité du courant électrique continu dans la bobine entraîne une augmentation de l'échauffement au sein de celle-ci. Un des critères de définition des machines électriques telles que les alternateurs industriels est la classe d'échauffement. Cette caractéristique, associée à la température de fonctionnement et à la classe de tenue thermique des matériaux isolants des bobines, conditionnent la durée de vie du système d'isolation électrique de la machine.

La fonction de maintien des conducteurs sur le corps de pôle est importante pour empêcher leur centrifugation, comme mentionné ci-dessus, mais il s'avère que la pression qu'exercent les cales sur la bobine est aussi un paramètre important pour l'efficacité du refroidissement du rotor.

Certaines des formes connues de cales n'assurent que la fonction de maintien. Dans ce cas, la qualité de l'échange thermique entre les bobines et le rotor est assez médiocre, et cela conduit à utiliser plus de matière active (cuivre, fer et/ou autres conducteurs) pour respecter une classe d'échauffement donnée.

La publication FR 2 842 666 Al divulgue un rotor comportant des pôles saillants ayant des bobines sur lesquelles des radiateurs servant également de cales sont plaqués par des tiges filetées.

Lors de la fabrication, les tiges sont serrées une première fois à froid, puis le rotor est passé à l'étuve. Un nouveau serrage est ensuite effectué alors que la machine est encore chaude, de façon à accroître la force avec laquelle les radiateurs sont plaqués sur les bobines et assurer un bon contact thermique. Ce deuxième serrage oblige à une manutention de la machine qui peut s'avérer délicate compte tenu de son poids et de son encombrement.

Afin de simplifier la fabrication, le deuxième serrage peut être omis mais le contact thermique est alors moins bon, amenant à réaliser la bobine avec davantage de cuivre pour réduire l'intensité de son courant donc son échauffement lors du fonctionnement, ce qui a pour inconvénient d'accroître le coût matière.

D'autres formes de cales exercent une pression sur la bobine, mais leur principe de conception ne permet pas de garantir une grande répétabilité en production du niveau de pression. Globalement, la qualité de l'échange thermique est meilleure, mais sa variabilité d'une machine à l'autre reste importante, et là encore, l'optimisation de la quantité de matière active n'est pas maximale.

Par exemple, il existe des rotors dans lesquels le serrage s'effectue par l'intermédiaire de rondelles Belleville. La présence de ces dernières est susceptible de nuire à la compacité de la machine et leur mise en place peut s'avérer difficile pour certaines configurations du rotor. De plus, ces rondelles sont susceptibles de perdre en élasticité lors du vieillissement de la machine, réduisant ainsi la fiabilité ou imposant une maintenance accrue.

Enfin, il existe des cales dont le niveau de pression est beaucoup plus maîtrisable en production, ce qui contribue à une dispersion limitée de la qualité de l'échange thermique. Cette maîtrise est une des clés pour l'optimisation de la quantité de matière active du rotor pour un niveau d'échauffement donné. Il s'agit très souvent de systèmes à vissage, qui mettent en œuvre un nombre de composants important, et malheureusement, cela complexifie la réalisation de l'assemblage et allonge les temps de mise en œuvre.

Il existe un besoin pour simplifier la fabrication des rotors bobinés sans que cette simplification n'entraîne une dégradation outre mesure des performances thermiques ni n'amène à accroître la quantité de matière active utilisée pour compenser un transfert thermique moins bon.

FR 2 940 867 A1, EP 1 983 635 A2 , US 2017/163116 A1, US 2 720 605 A divulguent des machines à rotor comprenant des cales pour maintenir les bobines des pôles saillants contre les corps de pôle selon l'art antérieur.

### Exposé de l'invention

La présente invention vise à répondre à ce besoin et a ainsi pour objet, selon l'un de ses aspects, une machine tournante électrique selon la revendication 1.

Par « espace inter-polaire », on entend l'espace défini entre deux pôles consécutifs.

Le couple de cales permet d'assurer le maintien des bobines sur le rotor et rend possible la maîtrise de la pression que les cales exercent sur les bobines, sans y adjoindre d'autres composants.

Les première et deuxième cales sont mobiles dans l'espace inter-polaire l'une par rapport à l'autre le long de l'axe longitudinal du rotor. Lorsque le couple de cales est en place dans l'espace inter-polaire contre les bobines, il suffit de déplacer les cales l'une par rapport à l'autre le long de l'axe longitudinal du rotor pour qu'elles exercent la pression voulue sur les bobines.

La ou les surfaces de contact de la première cale sont configurées pour venir en contact avec la ou les surfaces de contact de la deuxième cale lors du déplacement longitudinal d'une cale par rapport à l'autre.

Les surfaces de contact des première et deuxième cales présentent des pentes par rapport à l'axe longitudinal du rotor.

L'angle des pentes par rapport à l'axe longitudinal du rotor peut être inférieur à l'angle définissant le cône de frottement d'adhérence du matériau constituant les cales. Cela permet que les cales s'auto-maintiennent et ne libèrent pas leur pression après serrage de celles-ci. Cet effet autobloquant tend à augmenter avec la rotation du rotor, car sous l'effet de la force centrifuge, plus les bobines poussent sur les cales et mieux les cales sont maintenues en place l'une au contact de l'autre.

Les surfaces de contact des première et deuxième cales peuvent être crantées, et peuvent comporter notamment des reliefs antiretour. Cela facilite le maintien de la position longitudinale relative entre les première et deuxième cales, notamment avant le serrage contrôlé de ces dernières.

La machine selon l'invention peut fournir une puissance comprise par exemple entre 10 et 2000 kW.

Le rotor peut comporter un nombre N de pôles qui est par exemple compris entre 4 et 16 ou plus.

Le rotor comporte par exemple quatre, six, huit, dix, douze, quatorze ou seize pôles ou plus.

Les première et deuxième cales peuvent être réalisées par moulage et/ou usinage, de préférence par moulage par injection.

Les première et deuxième cale peuvent être réalisées de façon monolithique.

Les première et deuxième cales peuvent comporter, voire être constituées, par un matériau métallique, notamment de l'aluminium ou un alliage d'aluminium, ou par un matériau isolant électrique, notamment un thermoplastique ou un thermoplastique chargé. L'utilisation d'un matériau isolant électrique permet de ne pas avoir recours à l'utilisation d'un matériau isolant électrique disposé, notamment sous forme de feuille mince, entre les cales et les bobines sur lesquelles elles sont positionnées.

La machine selon l'invention peut comporter un matériau isolant électrique, notamment sous forme de feuille mince, disposé entre les cales et les bobines sur lesquelles elles sont positionnées. Cela permet d'isoler électriquement les cales des bobines, notamment lorsque les cales comportent, voire sont constituées, par un matériau métallique.

Les première et deuxième cales peuvent comporter chacune une partie intérieure qui est configurée pour s'appliquer sur la bobine et une partie extérieure qui s'étend dans l'ouverture entre deux pôles saillants consécutifs, ces deux parties se rejoignant à une extrémité en formant un angle, de préférence aigu, entre elles et les surfaces de contact étant situées aux extrémités libres desdites parties.

L'angle formé entre les parties intérieure et extérieure au niveau de l'extrémité de la cale peut être sensiblement égal à la moitié de l'angle formé entre deux pôles consécutifs, soit sensiblement égal à (1/2) × (360°/N), N étant le nombre de pôles du rotor.

Chaque pôle saillant peut comporter une paire de cornes polaires situées de part et d'autre dudit pôle saillant, et l'extrémité de la cale étant configurée pour venir prendre appui sous les cornes polaires après montage des cales dans l'espace inter-polaire correspondant.

La partie intérieure peut comporter un corps s'étendant selon un plan P et se prolongeant par une avancée présentant une rupture de pente avec le plan P, l'avancée présentant une surface supérieure.

L'angle formé entre le plan P et l'avancée peut être sensiblement égal à la moitié de l'angle formé entre deux pôles consécutifs, soit sensiblement égal à (1/2) × (360°/N), N étant le nombre de pôles du rotor. L'angle formé entre le plan P et l'avancée et l'angle formé entre les parties intérieure et extérieure au niveau de l'extrémité de la cale peuvent être sensiblement égaux.

La partie extérieure peut comporter un corps comportant un méplat définissant une surface inférieure.

Les première et deuxième cales peuvent comporter des reliefs coopérant contribuant à les guider dans leur déplacement l'une par rapport à l'autre. Cela permet un guidage dans la direction parallèle mais également dans la direction perpendiculaire à la direction de déplacement d'une cale par rapport à l'autre (déplacement selon l'axe de rotation du rotor).

Les reliefs coopérant d'une cale peuvent comporter des languettes, notamment des languettes s'étendant en avant des surfaces de contact et disposées pour venir glisser sur la face supérieure de l'avancée et la face inférieure du méplat de l'autre cale lors du déplacement longitudinal de la cale par rapport à l'autre.

Les parties intérieure et extérieure peuvent être nervurées et comporter des nervures de rigidification.

Les parties intérieure et extérieure d'une cale peuvent définir chacune des surfaces de contact avec l'autre cale du couple.

Les première et deuxième cales peuvent être identiques et positionnées tête-bêche dans l'espace inter-polaire.

La machine selon l'invention peut comporter dans chaque espace inter-polaire plusieurs couples de cales répartis le long de l'axe longitudinal du rotor. On peut choisir le degré de maintien des bobines sur le rotor en adaptant le nombre de couples de cales répartis le long de l'axe du rotor dans chaque espace inter-polaire.

Le nombre de couples de cales répartis le long de l'axe longitudinal du rotor dans chaque espace inter-polaire peut être compris entre 1 et 5, de préférence au moins 2.

L'invention a encore pour objet, selon un autre de ses aspects, un alternateur comportant un rotor selon l'invention, tel que défini plus haut.

L'invention a encore pour objet, selon un autre de ses aspects, un procédé de fabrication d'un rotor de machine tournante électrique selon la revendication 15.

Le déplacement de la première cale par rapport à la deuxième dans l'espace inter-polaire est réalisé à l'aide d'un outil permettant un serrage contrôlé des bobines des premier et deuxième pôles saillants respectivement contre les corps de pôle des premier et deuxième pôles saillants. Un couple de cales et un outil adapté suffisent à assurer les fonctions de maintien et de pressage maîtrisé des bobines sur le rotor. Connaissant l'angle de la pente entre les cales et les coefficients de frottement des surfaces en contact, il est aisé de déterminer la force à appliquer lors du serrage des cales pour obtenir la pression de serrage initiale souhaitée sur les bobines. Cette pression est maîtrisée par la relation qui existe entre l'effort exercée par l'outil et celui obtenu sur la bobine.

### Brève description des figures

L'invention pourra être mieux comprise à la lecture de la description détaillée qui va suivre, d'un exemple non limitatif de mise en œuvre de celle-ci et à l'examen du dessin annexé, sur lequel :
- les figures 1 et 2 sont des vues schématiques et partielles, en perspective, d'un rotor réalisé conformément à l'invention, respectivement avant et après serrage des cales,
- la figure 3 est une vue selon un axe perpendiculaire à l'axe longitudinal du rotor, schématique et partielle, d'un détail de réalisation du rotor au niveau de l'espace inter-polaire, et
- la figure 4 représente, en perspective, un exemple de couple de cales conforme à l'invention.

### Description détaillée de l'invention

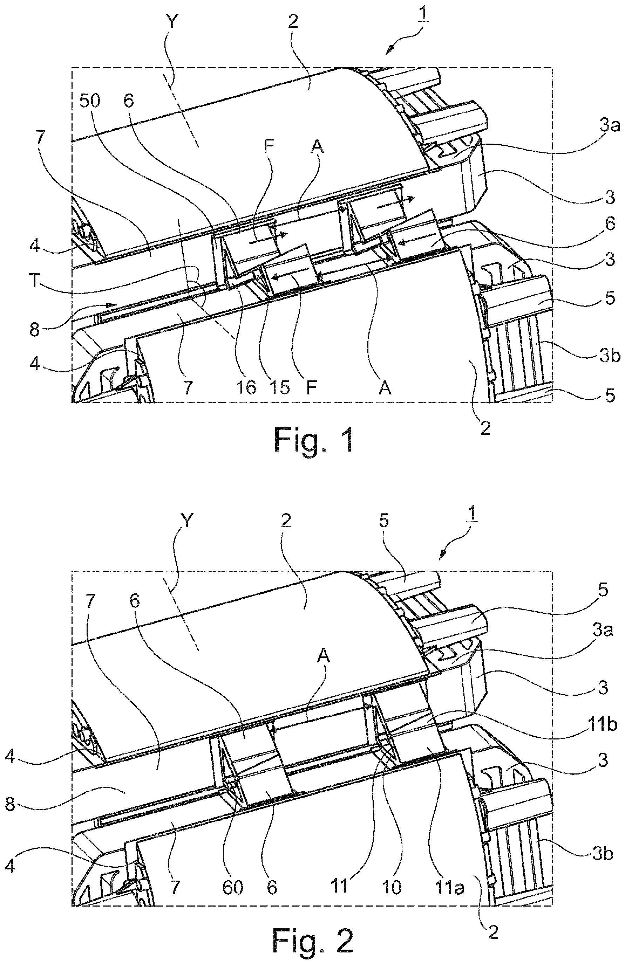

On a représenté sur la figure 1 un rotor 1 d'alternateur destiné à être entraîné en rotation, par exemple à une vitesse de 1800 tr/mn, pour fournir une puissance par exemple comprise entre 10 et 2000 kW.

Le rotor 1 comporte un circuit magnétique, qui peut être massif ou non, ce circuit magnétique comportant des noyaux polaires 2 (encore appelés dents) portant chacun une bobine 3 formée par l'enroulement d'au moins un conducteur électrique.Sur la figure 1, on a représenté seulement deux pôles saillants consécutifs faisant partie du circuit magnétique de ce rotor 1. Ces deux pôles consécutifs sont décalés angulairement d'un angle de 360°/N, N étant le nombre de pôles du rotor 1. Cet angle formé entre ces deux pôles consécutifs correspond sur la figure 1 à l'angle T formé entre les deux flancs 7 adjacents de deux bobines 3 consécutives lorsque le rotor 1 est observé dans un plan perpendiculaire à l'axe longitudinal du rotor 1, d'où T = 360°/N, N étant le nombre de pôles du rotor 1.

Chaque bobine 3 comporte deux portions longitudinales 3a qui s'étendent sensiblement parallèlement à l'axe longitudinal du rotor 1 et deux portions transversales 3b (encore appelées têtes de bobine) qui s'étendent sensiblement perpendiculairement à l'axe longitudinal du rotor 1.

Chaque bobine 3 présente, lorsqu'observé selon l'axe Y, une section généralement rectangulaire, les grands côtés correspondants aux portions longitudinales 3a.

Chaque noyau polaire 2 est prolongé, du côté de son extrémité radialement extérieure, par un épanouissement polaire comportant deux cornes polaires 4 s'étendant longitudinalement parallèlement à l'axe de rotation du rotor 1.

Lorsque le rotor 1 tourne, des forces centrifuges s'exercent sur les portions longitudinales 3a et transversales 3b des bobines 3. Les portions longitudinales 3a sont retenues par les cornes polaires 4 tandis que les portions transversales 3b viennent en appui sur des ensembles de doigts 5.

Le rotor 1 présente entre deux noyaux polaires 2 consécutifs un espace inter-polaire 8.

Des cales 6 viennent en appui dans chaque espace inter-polaire 8 respectivement sur les flancs 7 adjacents de deux bobines 3 et servent au maintien de celles-ci sur le rotor 1.

Au moins une cale 6 peut venir en appui direct sur la bobine 3 correspondante. On a alors un contact direct entre la cale 6 et la bobine 3.

En variante, au moins une cale 6 vient en appui indirect sur la bobine 3 correspondante. On a alors un élément intercalaire 50 qui est disposé entre la cale 6 et la bobine 3. Par exemple, un matériau isolant électrique, notamment sous forme de feuille, un élément ayant un rôle thermique et/ou un élément ayant un rôle de répartition d'efforts sont interposés entre la cale 6 et la bobine 3.

Dans l'exemple considéré, le nombre de couples de cales 6 répartis le long de l'axe longitudinal du rotor 1 dans chaque espace inter-polaire 8 est égal à 2.

En fonction de la longueur du rotor 1 et du maintien désiré, ce nombre de couples de cales peut varier et être compris par exemple entre 1 et 5.

L'écartement A entre deux couples de cales 6 présents dans un même espace inter-polaire 8 peut être compris par exemple entre 3 et 8 cm.

Sur la figure 1, les cales 6 sont représentées après montage dans l'espace inter-polaire 8 mais avant serrage de celles-ci.

Les cales 6 venant en appui sur un flanc 7 d'une bobine 3 sont mobiles par rapport à celles venant en appui sur le flanc 7 de la bobine 3 adjacente selon le sens des flèches F indiquées à la figure 1. Ce coulissement longitudinal des cales 6 d'un même couple de cales, en rapprochement l'une de l'autre, permet leur serrage.

La figure 2 est une vue analogue à la figure 1, après serrage des cales 6.

Comme illustré à la figure 2, l'assemblage formé après serrage de deux cales 6 d'un couple peut présenter un canal 60 dont la section dans un plan perpendiculaire à l'axe de rotation du rotor 1 peut être de forme générale triangulaire. De l'air peut passer à travers ce canal 60 ce qui peut permettre d'augmenter l'efficacité du refroidissement du rotor 1 lors de la rotation de ce dernier.

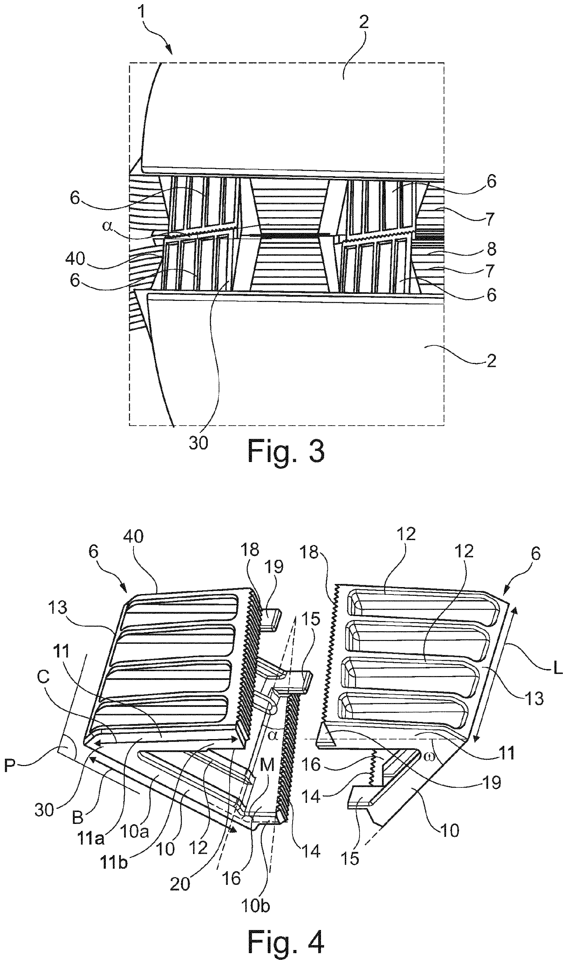

On a représenté à la figure 3 le rotor 1 selon un axe perpendiculaire à son axe longitudinal comportant deux couples de cales 6 dans l'espace inter-polaire 8 après serrage de celles-ci. On peut soumettre chaque couple de cales 6 à un déplacement choisi en fonction de l'effort de serrage à appliquer localement. Ainsi, comme illustré à la figure 3, le déplacement relatif imposé aux cales 6 d'un couple peut être différent de celui de l'autre couple.

On a représenté à la figure 4 un couple de cales 6, identiques et positionnées tête-bêche avant montage de celles-ci dans un espace inter-polaire.

Chaque cale 6 comporte une partie intérieure 10 qui est configurée pour s'appliquer sur le flanc 7 d'une bobine 3 et une partie extérieure 11 qui s'étend dans l'ouverture entre deux pôles saillants consécutifs.

La largeur B de la partie intérieure 10 est comprise par exemple entre 1,5 et 8 cm.

La largeur C de la partie intérieure 10 est comprise par exemple entre 1 et 5 cm.

La longueur L de la cale 6 est comprise par exemple entre 2 et 6 cm.

Les parties intérieure 10 et extérieure 11 peuvent être nervurées et comporter des nervures 12 de rigidification.

Les parties intérieure 10 et extérieure 11 se rejoignent à une extrémité 13 et forme un angle aigu ω entre elles. Les extrémités 13 sont destinées à venir prendre appui sous les cornes polaires 4 après montage des cales 6 dans l'espace inter-polaire correspondant.

L'angle ω formé entre les parties intérieure 10 et extérieure 11 au niveau de l'extrémité 13 de la cale est sensiblement égal à la moitié de l'angle T formé entre deux pôles consécutifs, soit ω = (1/2) × T = (1/2) × (360°/N), N étant le nombre de pôles du rotor 1. L'angle ω est compris par exemple entre 50 et 10°.

La partie intérieure 10 comporte un corps 10a qui s'étend selon un plan P et qui est prolongé par une avancée 10b, cette dernière présentant une rupture de pente avec le plan P selon un angle M.

L'angle M formé entre le plan P et l'avancée 10b est sensiblement égal à l'angle ω. L'angle M est compris par exemple entre 50 et 10°.

L'avancée 10b s'étend selon une forme biseautée et comporte à son extrémité libre une surface de contact 14 qui forme un angle α avec l'axe longitudinal du rotor.

L'angle α peut être inférieur à l'angle définissant le cône de frottement d'adhérence du matériau constituant les cales 6.

L'angle α est compris par exemple entre 2 et 10°.

L'avancée 10b présente une surface supérieure 16.

La partie extérieure 11 comporte un corps 11a comportant un méplat 11b qui s'étend parallèlement au plan selon lequel l'avancée 10b s'étend. Le méplat 11b définit une surface inférieure 20.

Le méplat 11b s'étend selon une forme biseautée et comporte à son extrémité libre une surface de contact 18 qui forme un angle α avec l'axe longitudinal du rotor.

Les surfaces de contact 14 et 18 d'une cale 6 sont configurées pour coulisser respectivement sur les surfaces de contact 14 et 18 de l'autre cale 6 du couple lors du coulissement longitudinal d'une cale 6 par rapport à l'autre.

Les surfaces de contact 14 et 18 peuvent présenter un état de surface configuré pour augmenter le coefficient de frottement, voire obtenir un effet antiretour. Par exemple, les surfaces de contact 14 et 18 présentent une texturation ou des reliefs tels que des ondulations et/ou des crans. Afin d'obtenir un effet antiretour, les surfaces de contact 14 et 18 peuvent comporter des reliefs antiretour comportant un flanc droit et un flanc incliné. Ces reliefs antiretour sont configurés pour autoriser le rapprochement de la cale 6 par rapport à l'autre (selon le sens des flèches F indiquées à la figure 1) mais bloquer leur éloignement (selon le sens opposé des flèches F indiquées à la figure 1). En effet, les flancs droits des reliefs antiretour permettent de bloquer la cale 6 par rapport à l'autre.

La partie intérieure 10 peut comporter à son extrémité libre un relief coopérant 15 qui contribue au guidage du déplacement longitudinal de la cale 6 par rapport à l'autre indépendamment du rotor 1. Ce relief coopérant 15 peut se présenter, comme illustré à la figure 4, sous la forme d'une languette disposée à l'extrémité de l'avancée 10b et dépassant de la surface de contact 14. Ce relief coopérant 15 peut venir glisser sur la face supérieure 16 de l'avancée 10b de l'autre cale 6 lors du déplacement longitudinal de la cale 6 par rapport à l'autre.

De même, la partie extérieure 11 peut comporter à son extrémité libre un relief coopérant 19 qui contribue au guidage du déplacement longitudinal de la cale 6 par rapport à l'autre indépendamment du rotor 1. Ce relief coopérant 19 peut se présenter, comme illustré à la figure 4, sous la forme d'une languette disposée à l'extrémité du méplat 11b et dépassant de la surface de contact 18. Ce relief coopérant 19 peut venir glisser sur la face inférieure 20 du méplat 11b de l'autre cale 6 lors du déplacement longitudinal de la cale 6 par rapport à l'autre.

Les reliefs coopérants 15 et 19 d'une cale 6 peuvent être situés du même côté de la cale 6.

Comme illustré à la figure 1, les cales 6 sont d'abord montées dans chaque espace inter-polaire 8, de manière à ce qu'elles prennent appui respectivement sur les flancs 7 adjacents de deux bobines 3.

Le serrage des bobines 3 contre leurs corps de pôles respectifs est effectué par un déplacement des cales 6 venant en appui sur un flanc 7 d'une bobine 3 par rapport à celles venant en appui sur le flanc 7 de la bobine 3 adjacente selon le sens des flèches F indiquées à la figure 1. Ce déplacement relatif des cales 6 d'un même couple selon l'axe longitudinale du rotor 1, en rapprochement l'une de l'autre, permet leur serrage.

Lors du serrage, les surfaces de contact 14 et 18 de la cale 6 viennent coulisser respectivement sur les surfaces de contact 14 et 18 de l'autre cale 6 du couple, et les reliefs coopérant 15 et 19 de la cale 6 viennent glisser respectivement sur la face supérieure 16 de l'avancée 10b et la face inférieure 20 du méplat 1 1b de l'autre cale 6 du couple.

Le serrage peut être effectué à l'aide d'un outil (non représenté) comportant une mâchoire dont les mors prennent appui sur les bords latéraux 30 et 40 de la cale 6. L'outil peut être actionné manuellement ou par un vérin ou par tout autre mécanisme de déplacement adapté.

Par exemple, le serrage est effectué à l'aide d'au moins une clé dynamométrique. Un calculateur peut permettre de calculer, en fonction de la relation qui existe entre l'effort de serrage exercé et celui obtenu sur la bobine 3, la force de serrage nécessaire et arrêter le déplacement relatif des cales 6 du couple lorsque la pression souhaitée qui est exercée sur la bobine 3 est atteinte.

La force de serrage nécessaire est par exemple comprise entre 1000 et 10000 N.

Le serrage tel que décrit ci-dessus peut être effectué pour chaque couple de cale 6 et chaque espace inter-polaire 8.

Le serrage s'effectue par exemple d'abord dans la région médiane du rotor 1 puis les couples de cales 6 sont serrées en allant vers les extrémités axiales. Le serrage est ensuite finalisé en venant de nouveau serrer les couples de cales 6 dans la région médiane du rotor 1 puis en allant de nouveau vers les extrémités axiales. Cela permet d'avoir un serrage relativement uniforme des cales 6 sur les bobines 3.

Le procédé de fabrication du rotor 1 selon l'invention peut, en outre, comporter au moins une étape de finition, telle qu'une étape d'imprégnation.

Bien entendu, l'invention n'est pas limitée aux exemples qui viennent d'être décrits - l'invention est toutefois limitée par les revendications annexées.

En particulier, les dimensions des cales 6 et l'écartement A entre chaque couple de cales 6 sont adaptés en fonction de la dimension du rotor 1.

L'expression « comportant un » doit être comprise comme étant synonyme de « comprenant au moins un », sauf si le contraire est spécifié.

## Revendications

1. Machine tournante électrique comportant un rotor (1) comportant :
- des pôles saillants, chaque pôle saillant comportant un corps de pôle entouré par au moins une bobine (3),
- au moins un couple de cales (6) comportant une première cale (6) positionnée contre la bobine (3) d'un premier pôle saillant et une deuxième cale (6) positionnée contre la bobine (3) d'un deuxième pôle saillant consécutif au premier, les première et deuxième cales (6) étant positionnées dans un espace inter-polaire (8),
les première et deuxième cales (6) étant mobiles dans l'espace inter-polaire (8) l'une par rapport à l'autre le long de l'axe longitudinal du rotor (1), et présentant chacune au moins une surface de contact (14 ; 18), les surfaces de contact (14 ; 18) des première et deuxième cales (6) présentant des pentes par rapport à l'axe longitudinal du rotor (1), la ou les surfaces de contact (14 ; 18) de la première cale (6) étant configurées pour venir en contact avec la ou les surfaces de contact (14 ; 18) de la deuxième cale (6) lors du déplacement longitudinal d'une cale par rapport à l'autre de telle sorte à induire une poussée des cales sur les bobines (3) de manière à maintenir les bobines (3) des premier et deuxième pôles saillants respectivement contre les corps de pôle des premier et deuxième pôles saillants.

2. Machine selon la revendication 1, l'angle des pentes par rapport à l'axe longitudinal du rotor (1) étant inférieur à l'angle définissant le cône de frottement d'adhérence du matériau constituant les cales (6).

3. Machine selon la revendication 1 ou 2, les surfaces de contact (14 ; 18) des première et deuxième cales (6) étant crantées, comportant notamment des reliefs antiretour.

4. Machine selon l'une quelconque des revendications précédentes, les première et deuxième cales (6) comportant, voire étant constituées, par un matériau métallique, notamment de l'aluminium ou un alliage d'aluminium, ou par un matériau isolant électrique, notamment un thermoplastique ou un thermoplastique chargé.

5. Machine selon l'une quelconque des revendications précédentes, comportant un matériau isolant électrique, notamment sous forme de feuille mince, disposé entre les cales (6) et les bobines (3) sur lesquelles elles sont positionnées.

6. Machine selon l'une quelconque des revendications précédentes, les première et deuxième cales (6) comportant chacune une partie intérieure (10) qui est configurée pour s'appliquer sur la bobine (3) et une partie extérieure (11) qui s'étend dans l'ouverture entre deux pôles saillants consécutifs, ces deux parties (10 ; 11) se rejoignant à une extrémité (13) en formant un angle entre elles et les surfaces de contact (14 ; 18) étant situées aux extrémités libres desdites parties (10 ; 11).

7. Machine selon la revendication 6, chaque pôle saillant comportant une paire de cornes polaires (4) situées de part et d'autre dudit pôle saillant, et l'extrémité (13) de la cale (6) étant configurée pour venir prendre appui sous les cornes polaires (4) après montage des cales (6) dans l'espace inter-polaire (8) correspondant.

8. Machine selon la revendication 6 ou 7, la partie intérieure (10) comportant un corps (10a) s'étendant selon un plan P et se prolongeant par une avancée (10b) présentant une rupture de pente avec le plan P, l'avancée (10b) présentant une surface supérieure (16).

9. Machine selon l'une quelconque des revendications 6 à 8, la partie extérieure (11) comportant un corps (11a) comportant un méplat (11b) définissant une surface inférieure (20).

10. Machine selon l'une quelconque des revendications précédentes, les première et deuxième cales (6) comportant des reliefs coopérant (15 ; 19) contribuant à les guider dans leur déplacement l'une par rapport à l'autre.

11. Machine selon la revendication 10, les reliefs coopérant (15; 19) d'une cale (6) comportant des languettes, notamment des languettes s'étendant en avant des surfaces de contact (14; 18) et disposées pour venir glisser sur la face supérieure (16) de l'avancée (10b) et la face inférieure (20) du méplat (11b) de l'autre cale (6) lors du déplacement longitudinal de la cale (6) par rapport à l'autre.

12. Machine selon la revendication 6, les parties intérieure (10) et extérieure (11) étant nervurées et comportant des nervures (12) de rigidification, et les parties intérieure (10) et extérieure (11) d'une cale (6) définissant de préférence chacune des surfaces de contact (14 ; 18) avec l'autre cale (6) du couple.

13. Machine selon l'une quelconque des revendications précédentes, les première et deuxième cales (6) étant identiques et positionnées tête-bêche dans l'espace inter-polaire (8).

14. Machine selon l'une quelconque des revendications précédentes, comportant dans chaque espace inter-polaire (8) plusieurs couples de cales (6) répartis le long de l'axe longitudinal du rotor (1).

15. Procédé de fabrication d'un rotor (1) de machine tournante électrique selon la revendication 1, dans lequel le serrage des bobines (3) des premier et deuxième pôles saillants respectivement contre les corps de pôle des premier et deuxième pôles saillants est effectué par un déplacement de la première cale (6) par rapport à la deuxième dans l'espace inter-polaire (8) le long de l'axe longitudinal du rotor (1), le déplacement de la première cale (6) par rapport à la deuxième dans l'espace inter-polaire (8) étant de préférence réalisé à l'aide d'un outil permettant un serrage contrôlé des bobines (3) des premier et deuxième pôles saillants respectivement contre les corps de pôle des premier et deuxième pôles saillants.

## Patentansprüche

1. Rotierende elektrische Maschine mit einem Rotor (1), welcher umfasst:
- ausgeprägte Pole, wobei jeder ausgeprägte Pol einen Polkörper umfasst, der von wenigstens einer Spule (3) umgeben ist,
- wenigstens ein Paar Keile (6), das einen ersten Keil (6), der an der Spule (3) eines ersten ausgeprägten Pols anliegend positioniert ist, und einen zweiten Keil (6), der an der Spule (3) eines zweiten ausgeprägten Pols, der auf den ersten folgt, anliegend positioniert ist, umfasst, wobei der erste und der zweite Keil (6) in einer Pollücke (8) positioniert sind,
wobei der erste und der zweite Keil (6) in der Pollücke (8) relativ zueinander entlang der Längsachse des Rotors (1) beweglich sind und jeweils wenigstens eine Kontaktfläche (14; 18) aufweisen, wobei die Kontaktflächen (14; 18) des ersten und des zweiten Keils (6) Neigungen bezüglich der Längsachse des Rotors (1) aufweisen, wobei die Kontaktfläche oder die Kontaktflächen (14; 18) des ersten Keils (6) dafür ausgelegt sind, mit der Kontaktfläche oder den Kontaktflächen (14; 18) des zweiten Keils (6) bei der Längsverschiebung eines Keils relativ zum anderen in Kontakt zu kommen, derart, dass eine Schubwirkung der Keile auf die Spulen (3) hervorgerufen wird, um so die Spulen (3) des ersten und des zweiten ausgeprägten Pols am Polkörper des ersten bzw. zweiten ausgeprägten Pols anliegend zu halten.

2. Maschine nach Anspruch 1, wobei der Winkel der Neigungen bezüglich der Längsachse des Rotors (1) kleiner als der Winkel ist, der den Haftreibungskegel des Materials definiert, aus dem die Keile (6) bestehen.

3. Maschine nach Anspruch 1 oder 2, wobei die Kontaktflächen (14; 18) des ersten und des zweiten Keils (6) gezahnt sind, wobei sie insbesondere Reliefs zum Rückbewegungsschutz umfassen.

4. Maschine nach einem der vorhergehenden Ansprüche, wobei der erste und der zweite Keil (6) ein metallisches Material, insbesondere Aluminium oder eine Aluminiumlegierung, oder ein elektrisch isolierendes Material, insbesondere ein Thermoplast oder ein Thermoplast mit Füllstoff, umfassen oder sogar daraus bestehen.

5. Maschine nach einem der vorhergehenden Ansprüche, welche ein elektrisch isolierendes Material umfasst, insbesondere in Form einer dünnen Folie, das zwischen den Keilen (6) und den Spulen (3), an welchen diese positioniert sind, angeordnet ist.

6. Maschine nach einem der vorhergehenden Ansprüche, wobei der erste und der zweite Keil (6) jeweils einen inneren Teil (10), welcher dafür ausgelegt ist, an die Spule (3) angedrückt zu werden, und einen äußeren Teil (11), welcher sich in der Öffnung zwischen zwei aufeinander folgenden ausgeprägten Polen erstreckt, umfassen, wobei sich diese zwei Teile (10; 11) an einem Ende (13) vereinigen und dabei zwischen sich und den Kontaktflächen (14; 18), die sich an den freien Enden der Teile (10; 11) befinden, einen Winkel bilden.

7. Maschine nach Anspruch 6, wobei jeder ausgeprägte Pol ein Paar Polhörner (4) umfasst, die sich beiderseits dieses ausgeprägten Pols befinden, und das Ende (13) des Keils (6) dafür ausgelegt ist, sich nach der Anbringung der Keile (6) in der entsprechenden Pollücke (8) unter den Polhörnern (4) abzustützen.

8. Maschine nach Anspruch 6 oder 7, wobei der untere Teil (10) einen Körper (10a) umfasst, der sich entlang einer Ebene P erstreckt und durch einen Vorsprung (10b) verlängert wird, der eine von der Ebene P verschiedene Neigung aufweist, wobei der Vorsprung (10b) eine Oberseite (16) aufweist.

9. Maschine nach einem der Ansprüche 6 bis 8, wobei der äußere Teil (11) einen Körper (11a) umfasst, der eine Abflachung (11b) umfasst, die eine Unterseite (20) definiert.

10. Maschine nach einem der vorhergehenden Ansprüche, wobei der erste und der zweite Keil (6) zusammenwirkende Reliefs (15; 19) umfassen, die dazu beitragen, sie bei ihrer Verschiebung relativ zueinander zu führen.

11. Maschine nach Anspruch 10, wobei die zusammenwirkenden Reliefs (15; 19) eines Keils (6) Zungen aufweisen, insbesondere Zungen, die sich vor den Kontaktflächen (14; 18) erstrecken und so angeordnet sind, dass sie bei der Längsverschiebung des Keils (6) relativ zum anderen dann auf der Oberseite (16) des Vorsprungs (10b) und der Unterseite (20) der Abflachung (11b) des anderen Keils (6) gleiten.

12. Maschine nach Anspruch 6, wobei der innere (10) und der äußere Teil (11) gerippt sind und Versteifungsrippen (12) umfassen und der innere (10) und der äußere Teil (11) eines Keils (6) vorzugsweise jeweils eine Kontaktfläche (14; 18) mit dem anderen Keil (6) des Paares definieren.

13. Maschine nach einem der vorhergehenden Ansprüche, wobei der erste und der zweite Keil (6) identisch sind und umgekehrt in der Pollücke (8) positioniert sind.

14. Maschine nach einem der vorhergehenden Ansprüche, welche in jeder Pollücke (8) mehrere Paare von Keilen (6) umfasst, die entlang der Längsachse des Rotors (1) verteilt sind.

15. Verfahren zur Herstellung eines Rotors (1) einer rotierenden elektrischen Maschine nach Anspruch 1, wobei das Anpressen der Spulen (3) des ersten und des zweiten ausgeprägten Pols an den Polkörper des ersten bzw. zweiten ausgeprägten Pols durch eine Verschiebung des ersten Keils (6) relativ zum zweiten in der Pollücke (8) entlang der Längsachse des Rotors (1) bewirkt wird, wobei die Verschiebung des ersten Keils (6) relativ zum zweiten in der Pollücke (8) vorzugsweise mithilfe eines Werkzeugs durchgeführt wird, das ein kontrolliertes Anpressen der Spulen (3) des ersten und des zweiten ausgeprägten Pols an den Polkörper des ersten bzw. zweiten ausgeprägten Pols ermöglicht.

## Claims

1. Rotary electric machine comprising a rotor (1) comprising:
- salient poles, each salient pole comprising a pole body surrounded by at least one coil (3),
- at least one pair of wedges (6) comprising a first wedge (6) positioned against the coil (3) of a first salient pole and a second wedge (6) positioned against the coil (3) of a second salient pole consecutive with the first, the first and second wedges (6) being positioned in an inter-pole space (8),
the first and second wedges (6) being able to move in the inter-pole space (8) with respect to one another along the longitudinal axis of the rotor (1), and each having at least one contact surface (14; 18), the contact surfaces (14; 18) of the first and second wedges (6) exhibiting gradients with respect to the longitudinal axis of the rotor (1), the contact surface(s) (14; 18) of the first rotor (6) being configured to come into contact with the contact surface (s) (14; 18) of the second wedge (6) during the longitudinal movement of one wedge with respect to the other in such a way as to induce a pressing of the wedges against the coils (3) so as to hold the coils (3) of the first and second salient poles respectively against the pole bodies of the first and second salient poles.

2. Machine according to Claim 1, the angle of the gradients with respect to the longitudinal axis of the rotor (1) being less than the angle defining the cone of friction for grip of the material of which the wedges (6) are made.

3. Machine according to Claim 1 or 2, the contact surfaces (14; 18) of the first and second wedges (6) being notched, notably comprising nonreturn reliefs.

4. Machine according to any one of the preceding claims, the first and second wedges (6) comprising, or even consisting of, a metallic material, notably aluminium or an aluminium alloy, or an electrically insulating material, notably a thermoplastic or a reinforced thermoplastic.

5. Machine according to any one of the preceding claims, comprising an electrically insulating material, notably in the form of a thin sheet, placed between the wedges (6) and the coils (3) on which they are positioned.

6. Machine according to any one of the preceding claims, the first and second wedges (6) each comprising an inner part (10) which is configured to press against the coil (3) and an outer part (11) which extends into the opening between two consecutive salient poles, these two parts (10; 11) meeting at one end (13), forming an angle between them, and the contact surfaces (14; 18) being situated at the free ends of said parts (10; 11).

7. Machine according to Claim 6, each salient pole comprising a pair of pole tips (4) situated on either side of said salient pole, and the end (13) of the wedge (6) being configured to come to bear under the pole tips (4) after the wedges (6) have been mounted in the corresponding inter-pole space (8).

8. Machine according to Claim 6 or 7, the inner part (10) comprising a body (10a) extending along a plane P and being prolonged by a protrusion (10b) that exhibits a breaking gradient with the plane P, the protrusion (10b) exhibiting an upper surface (16).

9. Machine according to any one of Claims 6 to 8, the outer part (11) comprising a body (11a) comprising a flat (11b) defining a lower surface (20).

10. Machine according to any one of the preceding claims, the first and second wedges (6) comprising collaborating reliefs (15; 19) contributing to guiding them in their movement relative to one another.

11. Machine according to Claim 10, the collaborating reliefs (15; 19) of one wedge (6) comprising tabs, notably tabs extending forward of the contact surfaces (14; 18) and positioned to slide on the upper face (16) of the protrusion (10b) and the lower face (20) of the flat (11b) of the other wedge (6) during the longitudinal movement of the wedge (6) with respect to the other one.

12. Machine according to Claim 6, the inner (10) and outer (11) parts being ribbed and comprising stiffening ribs (12), and the inner (10) and outer (11) parts of one wedge (6) each preferably defining contact surfaces (14; 18) for contact with the other wedge (6) of the pair.

13. Machine according to any one of the preceding claims, the first and second wedges (6) being identical and positioned top to toe in the inter-pole space (8).

14. Machine according to any one of the preceding claims, comprising, in each inter-pole space (8), several pairs of wedges (6) distributed along the longitudinal axis of the rotor (1).

15. Method for manufacturing a rotor (1) of a rotary electric machine according to Claim 1, in which the clamping of the coils (3) of the first and second salient poles against the pole bodies of the first and second salient poles respectively is performed by moving the first wedge (6) with respect to the second in the inter-pole space (8) along the longitudinal axis of the rotor (1), the movement of the first wedge (6) with respect to the second in the inter-pole space (8) preferably being performed using a tool that allows controlled clamping of the coils (3) of the first and second salient poles against the pole bodies of the first and second salient poles respectively.
